(19) Europäisches Patentamt
European Patent Office
Office européen des brevets

(11) **EP 3 024 105 A1**

(12) # EUROPEAN PATENT APPLICATION

(43) Date of publication:
**25.05.2016 Bulletin 2016/21**

(21) Application number: **14194487.6**

(22) Date of filing: **24.11.2014**

(51) Int Cl.:
*H02J 3/00* (2006.01)      *H02J 3/16* (2006.01)
*H02J 3/18* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventor: **Dzafic, Izudin**
**71000 Sarajevo (BA)**

Remarks:
A request for correction of the description, on page 16, has been filed pursuant to Rule 139 EPC. A decision on the request will be taken during the proceedings before the Examining Division (Guidelines for Examination in the EPO, A-V, 3.).

(54) **Method and system for controlling reactive power in an electric distribution network**

(57)      The invention relates to method and system for controlling Reactive power in an electric distribution network (EDN), wherein the EDN includes one or more consumer nodes and one or more generation nodes. The method involves determining a state of a reactive power flow in an electric distribution network (EDN). Thereafter, a charging requirement for the consumer node in the EDN is determined. A charging schedule is generated based on the state of the reactive power flow in the EDN and the charging requirement. The system includes modules to generate a charging schedule so that the reactive power flow in the EDN is regulated. Further, the method and system enables integration of electric vehicles into the EDN without affecting the reactive power flow in the EDN.

FIG 1

EP 3 024 105 A1

**Description**

This invention relates to a method and system for controlling reactive power flow in an electric distribution grid by generating a charging schedule for electric vehicles connecting to the electric distribution grid.

Electric distribution grids are operated with a number of constraints in order to maintain a certain quality and reliability in the power it is offering. The distribution grids have to balance the active power and reactive power for maintaining the quality of power supply to one or more entities drawing power from the distribution grid. Increase in reactive power in the electric distribution grid leads to decreased quality of power delivered to the entities drawing power from the grid.

With the rising fuel charges and environmental concerns, electric vehicles (EVs) are gaining traction in the global market. In the coming years, millions of EVs are going to be inducted into the existing electric distribution grid. Such large scale charging infrastructure will have significant impact on load consumption profiles, generation schedules, network losses, power quality and voltage profiles. The aforementioned parameters will be affected as the loading level of certain network lines will reach a rated capacity and would result in decrease of node voltages below acceptable levels.

Thus, the object of the invention is to control the levels of reactive power or Volt-ampere-reactive (VAR) in the distribution grid. Further, there is a need for a system which takes into account the integration of EVs into the grid and generates a charging schedule so as to maintain the level of reactive power in the grid within a threshold value.

Accordingly, it is an object of the invention to disclose a method and system for controlling the reactive power within a distribution grid while taking into account the inclusion of EVs into the electric distribution grid. It is also an object of the invention to generate a charging schedule for EVs in order to control the reactive power flow within the electric grid.

The object of the invention is achieved by providing a method and system for controlling the reactive power flow within an electric distribution network (EDN). The EDN comprises a plurality of nodes wherein the nodes are at least one of a consumer node and a generation node. The system further includes a state signal generation module, configured to generate a state signal representing a current state of in the electricity distribution network. Furthermore, the system includes a charging schedule generation module, configured to generate a charging schedule, based on the state signal, to charge the entity at certain time intervals so as to regulate the reactive power flow within the EDN.

In an embodiment, the charging schedule generation module is further configured to generate the charging schedule having a minimum cost based on a charging demand and pricing contracts. The charging schedule generation module is configured to accept charging demands from consumer nodes and generate charging schedule based on the pricing contracts and generation costs of one or more suppliers providing electricity to the EDN.

In another embodiment, the charging schedule generation module is configured to process the charging demands obtained from one or more charging requirement modules, wherein the charging requirement modules are remotely located and configured to communicate the charging demand to the charging schedule generation module. The charging requirement module may be located at a consumer node in the EDN. For example, the consumer node may be a home with a one or more electric devices consuming electricity.

In yet another embodiment, the charging schedule generation module is configured to control the load tap settings and capacitor banks in order to regulate the flow of voltage and reactive power in the EDN. The charging schedule generation module controls the flow of reactive power in the EDN by considering an overall state of the EDN based on at least one of, real time load consumption of the consumer nodes. Further, the charging schedule generation module estimates the load profiles of the nodes in the EDN to predict the flow of reactive power in the EDN. Based on the short term load estimation, the charging schedule generation module controls at least one of load and tap settings and the capacitor banks to regulate the flow of reactive power in the EDN.

In a variation of the invention, the state signal generation module comprises a load classification module configured to classify loads/generators based on load prediction reliability. The state signal generation module further comprises an estimation module configured to generate the state signal based on the information provided by the load classification module and real time measurements of active and reactive power in the EDN.

In another variation of the invention, the charging schedule generation module is further configured to generate the charging schedule having a minimum cost based on a charging demand and pricing contracts. The charging schedule generation module may access a database 21 which includes the charging contracts between a distributor and the consumer and the pricing contracts between the producer and the distributor. Based on the charging and pricing contracts the charging schedule generation module generates a charging schedule with a minimum cost for the consumer. Further, the charging schedule is generated to increase the utilization of power generated from renewable sources of energy such as, wind, hydro electric and solar power.

In yet another variation, the charging schedule generation module is configured to process the charging demands obtained from one or more charging requirement modules, wherein the charging requirement modules are remotely located and configured to communicate the charging demand to the charging schedule generation module. The charging requirement modules may be located on the premises of a consumer node, such as a household. The charging module and the charging schedule generation module are communicatively coupled. The charging requirement module communicates a charging demand set by a consumer. Thereafter, the charging schedule generation module computes the charging schedule based on various parameters and controls the activation and deactivation of the charging requirement module based on the charging schedule.

In still yet another variation, the state signal generation module is configured to generate the state signal by processing at least one of a load/generator profile, historical data of load behaviour and energy meter reading from the one or more nodes. In addition, the state single generation module may process other parameters such as current weather condition, real-time power and voltage readings across the nodes in the EDN to calculate the state signal.

In an aspect of the invention, the state signal generation module comprises a load classification module configured to classify loads/generators based on load prediction reliability. Further, the state signal generation module includes an estimation module configured to generate the state signal based on the information provided by the load classification module and real time measurements of active and reactive power in the EDN. The state signal of the EDN, reflecting an overall state of the EDN, is generated by processing the outputs generated by load classification module and estimation module. The load classification module classifies the loads in the EDN based on the prediction accuracy. The estimation module generates an estimate of the overall condition of the EDN within a time interval.

In another aspect of the invention, the one or more charging requirement modules are deployed at one or more consumer nodes in the EDN. The charging requirement module is a standalone unit which includes a plug point, a display and an input unit. The consumer using the charging requirement module can input a charging demand which is relayed to the distributor. Based on the charging demand specified by the consumer the charging schedule is computed and the charging requirement module is controlled to meet the charging demand keeping the pricing of the electricity as low as possible.

In yet another aspect, an operating status of the charging requirement module is controlled by the charging schedule generation module. For example, the charging requirement module is turned on or off depending on the charging schedule.

In a variation of the invention, the one or more generation nodes are adapted to generate power using renewable energy. For example, the generation nodes may produce power using renewable energy sources such as wind, water and solar power. Further, the charging schedule generation module is configured to provide preference to use power generated by renewable sources of energy, as the costs of power generation may be low.

In another variation of the invention, the consumer node in the EDN is an electric vehicle. The electric vehicle may need to be charged when the battery is low on charge. The electric vehicles need to be integrated into the existing grid without any major impact on the operation of the grid. Hence, the charging schedule generation module is configured to generate a charging schedule so as to minimize the impact of supplying power to charge the electric vehicles.

The invention further provides method steps for achieving the object of controlling the reactive power within a distribution grid while taking into account the inclusion of EVs into the electric distribution grid. The method comprises determining a state of a reactive power flow in an electric distribution network (EDN). Further, the method comprises determining a charging requirement for the consumer node in the EDN. Thereafter, the method includes generating a charging schedule based on the state of the reactive power flow in the EDN and the charging requirement.

In an aspect, generating the charging schedule comprises computing a pricing level of the electricity supplied based on the charging requirement and selecting one or more energy suppliers based on one or more pricing contracts. The charging schedule is generated in such a way that the charging demand of the consumer node is fulfilled with a minimum cost. Further, generation nodes which generate electricity at a low cost, preferably using renewable sources of energy may be given a preference and the electricity provided to the consumer node may be sourced from such providers. Further, the charging or pricing contracts between the producer and distributor may be stored in a database 21 which is accessed by the charging schedule generation module.

In another aspect, generating the charging schedule comprises updating the charging schedule based on the charging demand and the state of the reactive power flow in the EDN. The EDN is monitored for a certain time interval for the levels of active and reactive power flow. Depending on the level of volt ampere reactive in the network the charging schedule is updated. The charging schedule is also updated based keeping the charging demand in consideration.

In yet another aspect of invention, updating the charging schedule comprises modifying the activation times of the consumer node to regulate the reactive power flow in the EDN within a permissible limit. The power supplied to the consumer node is controlled in ordered to regulate the reactive power flow in the EDN. The power may be supplied to the consumer node in accordance with the charging schedule. Further, the charging schedule may be updated periodically in order to regulate the reactive power flow within the EDN.

In a variation of the invention, determining a state of a reactive power flow in an electric distribution network (EDN) comprises computing the reactive loads at each node in the EDN. Further, load profiles of one or more nodes in the EDN are computed. The load profiles of the one or more nodes may be estimated based on historical load profiles of the nodes. Furthermore, a short term reactive load across all the nodes in the EDN is estimated. The short term reactive loads may be computed based on the historical estimation as well as real time active and reactive power readings of the nodes. Subsequently, a state signal is generated based on a current and estimated flow of reactive power in the nodes within the EDN. The state signal reflects the overall status of the active and the reactive power flow in the EDN.

In another variation, determining the charging requirement for the consumer node in the EDN comprises receiving a charging demand communicated by the consumer node. The charging demand is communicated to the electricity distributor. For example, the charging demand may be communicated through a broadband connection or a WAN. The charging demand may be set by an owner of the consumer node.

In a further variation, the charging demand includes a charging level and time duration for meeting the charging level. For example, if an electric vehicle needs to be charged, the charging demand includes the final battery charging level and the time duration for achieving the final battery charging level.

The above mentioned and other features of the invention will now be addressed with reference to the accompanying drawings of the present invention. The illustrated embodiments are intended to illustrated, but not limit the invention.

The present invention is further described hereinafter with reference to illustrated embodiments shown in the accompanying drawings, in which:

FIG 1    illustrates an exemplary electric distribution network (EDN) coupled with a VAR control server, in accordance with an embodiment;

FIG 2    illustrates an exemplary block diagram of a charging schedule generation module, in accordance with an embodiment;

FIG 3    illustrates an exemplary block diagram of a state signal generation module, in accordance with an embodiment;

FIG 4    illustrates an exemplary charging requirement module, in accordance with an embodiment;

FIG 5    illustrates exemplary block diagram of the method steps involved in generating a charging schedule and regulating reactive power flow in the EDN, in accordance with an embodiment;

FIG 6    illustrates exemplary method steps involved in generating the state signal of the EDN, in accordance with an embodiment;

FIG 7    illustrates exemplary flowchart of the steps involved in updating the charging schedule based on the reactive power flow in the EDN, in accordance with an embodiment; and

FIG 8    illustrates an exploded view of the VAR control server 6, in accordance with an embodiment.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

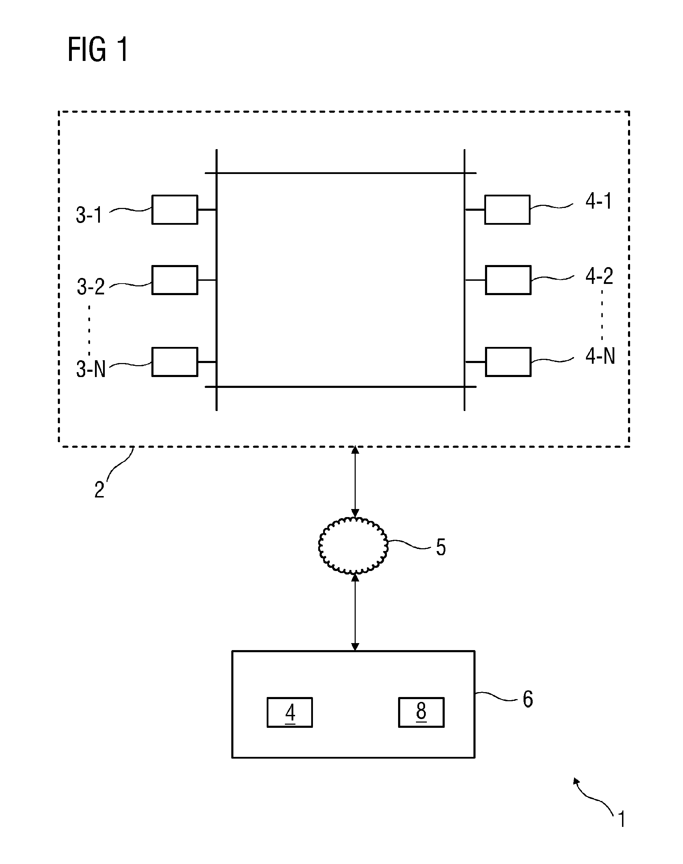

FIG 1 illustrates an exemplary electric distribution network (EDN) coupled with a VAR control server, in accordance with an embodiment. The EDN includes one or more generation nodes 4-1 to 4-N. The generation nodes include nodes where energy is generated using one or more of renewable and non-renewable sources of energy. The renewable sources of energy include, but are not limited to, solar energy, wind energy and hydro electricity. The non-renewable sources of energy include nodes generating electricity using diesel, coal and atomic energy. Further, the EDN includes one or more consumer nodes 4-1 to 4-N. The consumer nodes can include, for example, industries, household and offices which consume electricity from the generation nodes. In a preferred embodiment, the consumer node is an electric vehicle (EV). The EV can be a plug-in hybrid electric vehicle (PHEV). Due to the generation nodes and the consumer nodes there is a flow of active and reactive power in the EDN. For a normal operation of the EDN, the volt ampere reactive (VAR) needs to be regulated to be within permissible limits. In order to regulate reactive power flow within the EDN the nodes in the EDN are monitored continuously to ensure smooth functioning of the EDN.

The EDN may be maintained by a distributor, which may be a private entity or a government body. The distributor may have pricing contracts with a plurality of providers, who may own one or more generation nodes 3-1 to 3-N. In an exemplary scenario, the provider generating power using renewable source of energy may provide electricity to the distributor at a lesser price that that of a provider generating electricity using a non-renewable source of energy. The pricing contracts may be stored in a database 21. Further, consumer nodes may have a charging contract with the distributor, wherein the charging contract specifies the pricing of the electricity based on several usage conditions. For example, the charging contract may include a clause that the electricity used during peak usage hours will be charged at a higher price. The charging contracts may also be stored in the database 21. The pricing and charging contracts may be retrieved by the distributor while generating bills for a particular consumer node.

With the increasing adoption of electric vehicles (EVs), there is a need for integrating the EVs with the existing EDN. The EVs need electricity for charging the battery by using the electricity from the EDN. The integration of the EVs into the EDN may cause adverse effects on the EDN, for example, by increasing the reactive power flow in the EDN. In order to mitigate this adverse effect, the EDN needs to be monitored and the EVs need to be charged so that reactive power flow is regulated.

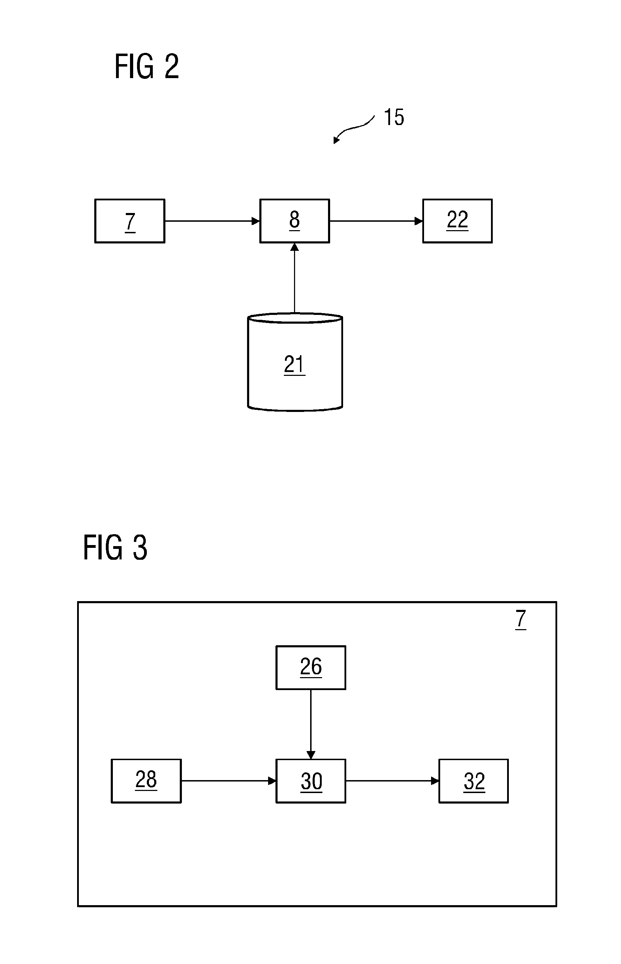

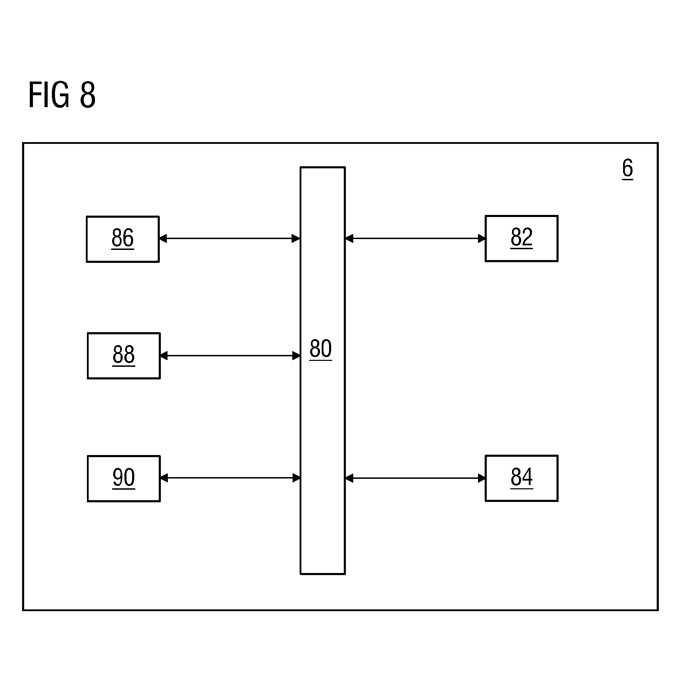

The EDN is coupled with a VAR control server 6 through a network 5. The network 5 may includes a wired or a wireless network such as, but not limited to, a Local Area network (LAN), a Wide Area Network (WAN), a Metropolitan Area Network (MAN), Wi-Fi, 3G network, LTE network and an RF network. The VAR control server 6 includes a state signal generation module 4 and a charging schedule generation module 8. The VAR control server will be explained in detail in FIG 8. The reactive power flow in the EDN is monitored by a state signal generation unit 4 residing in the VAR control sever 6. The state signal generation unit 4 computes a state signal which indicates an overall state of the EDN. The state signal generation module 4 will be explained in detail in conjunction with FIG 3. The state signal generated by the state signal generation module 4 is processed by the charging schedule generation module 8, which generates a charging schedule for charging one or more EVs consuming power from the EDN. The charging schedule generation module 8 also takes into account the reactive power flow in the EDN while generating the charging schedule. The charging schedule generation unit 8 may also process information associated with charging and pricing contracts, stored in the database 21, during the generation of the charging schedule. After generating the charging schedule, the charging schedule generation unit 8 controls the activation of the consumer node charging the EV in accordance with the charging schedule. The charging schedule generation unit 8 may additionally control the capacitor banks/load tap settings for regulating the reactive power flow in the EDN.

FIG 2 illustrates an exemplary block diagram 15 of a charging schedule generation module 8, in accordance with an embodiment. The charging schedule generation module 8 receives information from state signal generation module 7 and database 21. The charging schedule generation module 8 processes state signal generated from the state signal generation module 7, a charging demand and charging/pricing contracts to generate a charging schedule according to which a charge consuming entity will be charged. In this case, the charge consuming entity is an electric vehicle connected to a consumer node. The charging schedule generation module 8 generates charging schedules for a plurality of EVs connected to the EDN through one or more consumer nodes. The charging schedule generation module 8 is configured to minimize deviation from a rated current and voltage values and cost of generating power. For every node i in the EDN, the minimization of the goal function (1) has to satisfy the following function:

$$min \left[ \sum_{i=1}^{N} \left( \int_0^T \mu_i \left( \Delta \big( V_i(t) - V_{i,rated} \big) \right)^2 dt \right) + \sum_{i=1}^{N_{BR}} \left( \int_0^T c_j \left( \Delta \big( I_j(t) - I_{j,rated} \big) \right)^2 dt \right) + \right.$$

$$i{=}1Nci(PiGt) \quad (1)$$

subject to:

$$P_{i,min}^G \leq P_i^G(t) \leq P_{i,max}^G$$

$$Q_{i,min}^G \leq Q_i^G(t) \leq Q_{i,max}^G$$

$$0 \leq I_i^{EV}(t) \leq I_{i,max}^{EV}$$

$$B_i^0 + \int_0^T f_i^{charge}(V_i(t), t)\, dt = B_i$$

where the terms:

$P_i^G(t)$ refers to power generated at a node i,

$P_{i,min}^G$ is the minimum threshold value of power generated at node i,

$P_{i,max}^G$ is the maximum threshold value of power generated at node i,

$Q_i^G(t)$ is the reactive power generated at node i,

$Q_{i,min}^G$ is the minimum threshold value of reactive power generated at node i,

$Q_{i,max}^G$ is the maximum threshold value of reactive power generated at node i,

$I_i^{EV}(t)$ is the charging current of the EV connected to node i,

$I_{i,max}^{EV}$ is the maximum charging current of the EV connected to node i,

The $V_i(t)$ in the minimization function in equation 1, is subject to the following conditions (2):

$$\Delta\big(V_i(t) - V_{i,rated}\big) = \begin{cases} 0 & \forall t: V_{i,rated}^{min} \leq V_i(t) \leq V_{i,rated}^{max} \\ V_i(t) - V_{i,rated}^{min} & \forall t: V_i(t) \leq V_{i,rated}^{min} \\ V_i(t) - V_{i,rated}^{max} & \forall t: V_i(t) \geq V_{i,rated}^{max} \end{cases} \qquad (2)$$

where:

$V_{i,rated}^{min}$ is the minimum rated voltage of node i and $V_{i,rated}^{max}$ is the maximum rated voltage of the node i. The voltage across the node i is maintained between these two values.

Further, the $I_j(t)$ is subject the following conditions:

$$\Delta\big(I_j(t) - I_{j,rated}\big) = \begin{cases} 0 & \forall t: I_j(t) \leq I_{j,rated} \\ I_j(t) - I_{j,rated} & \forall t: I_j(t) \geq I_{j,rated} \end{cases} \qquad (3)$$

where $I_j(t)$ is the current flowing through the node j at time t. The current through the node j is maintained below a rated value $I_{j,rated}$ to ensure safe operation of the node j.

The equation 1 is also subject to the conditions of equation 4, which is the power balance function given as below:

$$g_i\left(V_i(t), P_i(t), Q_i(t), P_i^G(t), Q_i^G(t), f_i^{charge}(V_i(t), t)\right) = 0 \qquad (4)$$

wherein the terms of the equation 5 have the following meanings:

$V_i(t)$ is the voltage at node i,

$P_i(t)$ is the active power of the load at node i,

$P_i^G(t)$ is the active power at the generation node i,

$Q_i(t)$ is the reactive power generated at node i,

$Q_i^G(t)$ is the reactive power at the generation node i,

$f_i^{charge}(V_i(t),t)$ is the charging function for node i.

The charging schedule generation module 8 receives input from state signal generation module 7. The state signal generation module generates a state signal which represents the overall status of the EDN. The state signal generation module 7 monitors the active and reactive power levels across all the nodes of EDN. The state signal generation module 7 also classifies the nodes into load group and estimates the load profile of the load groups. The working of the state signal generation module 7 will be explained in conjunction with FIG 3. The charging schedule generation module 8 also minimizes the voltage (V) and current (I) across a node i along with the cost of the power generated. The equation 1 represents a minimization function wherein the voltage and current of the node i is minimized within a time interval T. Further, the cost of the power supplied to the node i is minimized by selecting a supplier with the lowest cost at that time interval. The term $c_i\left(P_i^G(t)\right)$ indicates the cost of the power generated by a generation node i, where $c_i$ is the cost of the power generated by the node i. The term $c_i$ is determined by the pricing contacts between the supplier and the distributor.

(2)

FIG 3 illustrates an exemplary block diagram of a state signal generation module, in accordance with an embodiment. The state signal generation module 7 includes a load classification module 30, meter reading module 28, short term load forecast module 26 and an estimation module 32. The load classification module 30 classifies the load in the EDN based on the load prediction reliability. For example, the loads may be classified based on, for example, seasons, utility and purpose. For example, the loads mostly used in winters such as heaters are classified as winter loads. In another example, nodes which are active during office timings are classified as industrial nodes. The load classification module 30 processes the inputs provided by the short term load forecast module 26 and the meter reading module 28. The short term load forecast module 26 estimates the short term load/generation profiles of one or more consumer nodes and generation nodes in the EDN. The load profile may be estimated based on historical load profiles stored in a database 21. The load profiles may also be estimated based on one or more real time factors such as temperature, wind speed, humidity and the like. The generation profiles need to be estimated for generation nodes which generate electricity using renewable sources of energy. For example, the short term load forecast module 26 may forecast the highest amount of electricity that can be generated at a time interval. In another example, the short term load forecast module 26 is configured to estimate the load demands of the consumer nodes at a certain time period. As the load profile of the aforementioned generation nodes rely on environmental conditions prevailing at a time interval. Further, the meter reading module 28 provides the automatic meter readings of the nodes in the EDN to the load classification module 30. The meter reading module 28 is configured to collect the meter readings of the nodes of the EDN. The meter readings provide the exact amount of active and reactive power generated at the nodes of the EDN. The meter readings provide the load classification module 30 to classify with improved accuracy. The estimation module 32 estimates the active and reactive power at each node in the EDN for a time interval. The estimation module 32 receives one or more real time values of current, voltage, active power and reactive power associated with a node in the EDN. The estimation module 32 processes the information and generates the voltages and angles at every node in the EDN. The estimation module 32 generates the state signal indicating the state of the reactive power levels at each node in the EDN. The state signal generation module is explained in detail in the pending US patent Application bearing application number US 13/879,452.

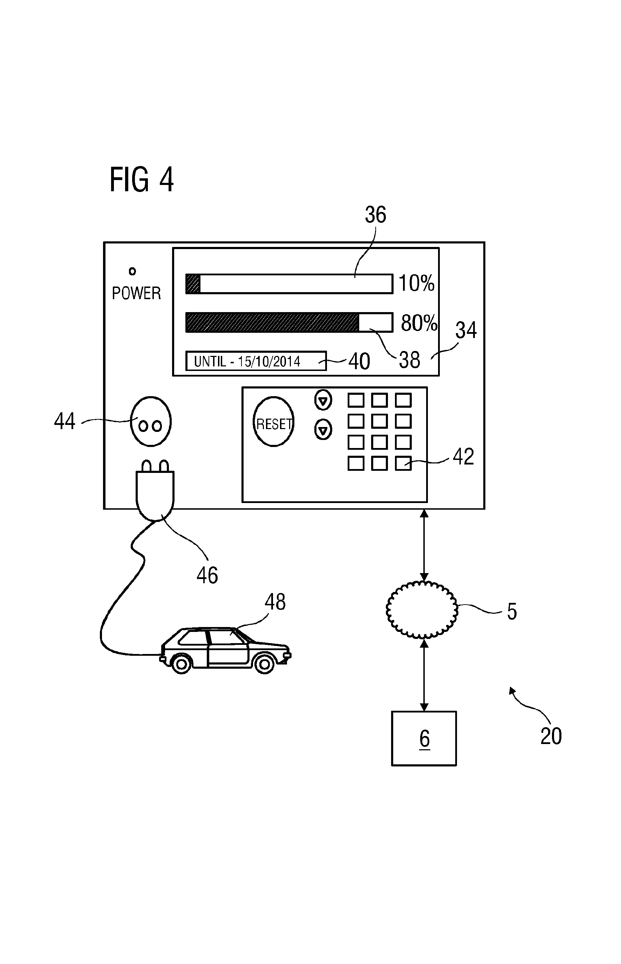

FIG 4 illustrates an exemplary charging requirement module 20, in accordance with an embodiment. The charging requirement module 20 includes a display 34, a plug point 44, an input unit 42 and a communication unit. The charging requirement module 20 provides the charging demands of a consumer node to the charging schedule generation module 8. The charging requirement module 20 can be used to specify the charging demand for a charge consuming entity and a time frame for meeting the charging demand. In an exemplary scenario, the owner of the consumer node wants to charge an electric vehicle (EV) 48, which is the charge consuming entity. Now the EV 48 needs to be integrated in the EDN without impacting the reactive power flow in the EDN. The owner enters into a charging contract with the distributor. The distributor may provide the charging requirement module 20 to the owner of the consumer node. Using the charging requirement module 20, the owner can plug the charging cable plug 46 of the EV 48 to in the plug point 44, as shown in FIG 4. Subsequently, the charging requirement module 20 displays the current charging level 36 of the battery of the EV 48 on the display module 34, as shown in FIG 4. Thereafter, the owner can specify a final charging level and a time limit 40 for fulfilling the file charging level, using the input unit 42. In FIG 4, it is show that the current charging level 36 of the EV 48 is at 10% and the final charging level 38 is specified at 80%. The final charging level is displayed on the display module 34, as shown in FIG 4. Further, the charging demand is communicatively coupled to the VAR control server 6 using the communication module. For example, the charging demand may be communicated using at least one of a wired and wireless network, such as network 5. In an instance, the charging demand may be communicated to the charging schedule generation module using a broadband internet connection subscribed by the owner.

In a preferred embodiment, the VAR control server 6 is configured to control the operation of the charging requirement module 20. The VAR control server 6 may turn off or turn on the charging requirement module 20 based on the charging schedule.

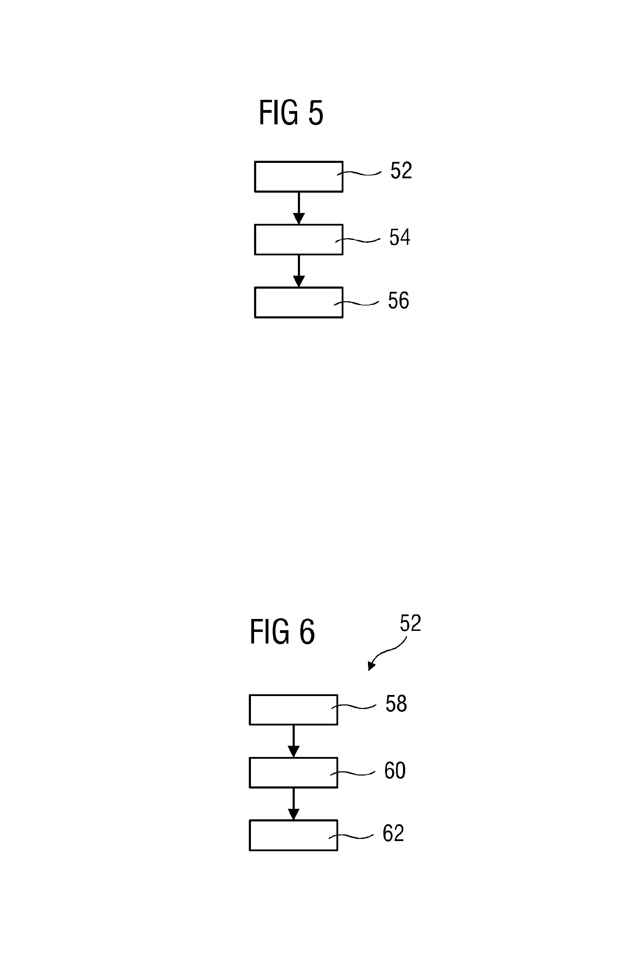

FIG 5 illustrates exemplary block diagram of the method steps involved in generating a charging schedule and regulating reactive power flow in the EDN, in accordance with an embodiment. At step 52, a state of a reactive power flow in an electric distribution network (EDN) is determined. The state of the reactive power flow may be determined by monitoring the functioning of the one or more nodes in the EDN. The state signal may include a voltage and phase angles at every node in the EDN. The step involved in computing the state signal is explained in FIG 5. Further, at step 54, a charging demand for the consumer node in the EDN is determined. The charging demand of the consumer node may include a final level of charging and the time frame within which the charging demand is to be achieved. In an embodiment, the charging demand is determined by accessing the charging demand set by a user using a remote device located at the locality of the user. At step 56, a charging schedule is generated based on the state of the reactive power flow in the EDN and the charging requirement. The charging schedule is computed in such a way so that the volt ampere reactive of the EDN is kept under permissible levels. Further, a pricing level of the electricity supplied is computed based on the charging requirement and selecting one or more energy suppliers based on one or more pricing contracts. One of the objectives of the charging schedule is to provide electricity to the user at the lowest possible cost. The cost of the electricity depends on factors such as, but not limited to, parameters of the charging demand and the supplier of electricity. The parameters of charging demand include the final level of charging and a time duration within which the final level of charging has to be fulfilled. In case the time duration is very short and the final level of charging is high then the user would be charged more. On the other hand, a supplier may generate electricity using renewable sources of energy which may be cheaper than other means for generating energy. In this case, the charging schedule is generated such that the electricity is sourced from the suppliers who offer electricity to the distributor at less cost.

In an embodiment, the charging schedule is updated periodically based on the charging demand and the state of the reactive power flow in the EDN. The EDN is monitored continuously for the levels of active and reactive power flow. The charging schedule is updated periodically in order to regulate the reactive power flow under permissible levels. Further, the activation times of the consumer node is modified to regulate the reactive power flow in the EDN within a permissible limit. The charging schedule is updated such that the charging demands are met and the reactive power flow in the EDN is regulated.

FIG 6 illustrates exemplary method steps involved in generating the state signal of the EDN, in accordance with an embodiment. At step 58, the load profiles of each node in the EDN are computed. In some embodiments, the active and reactive loads at each node are computed. The reactive load is computed based on one or more parameters such as a history of load predictions, environmental factors and automatic meter readings of the nodes. At step 60, a short term reactive load is estimated across all the nodes in the EDN. The estimation of the reactive load provides the information for updating the charging schedule in case the estimation suggests the reactive power flow may increase beyond permissible limits. At step 62, a state signal is generated based on a current flow and estimated flow of reactive power in the nodes within the EDN. In a preferred embodiment, the state signal is includes a voltage and a phase angle of a node in the EDN. The state signals of each of the nodes in the EDN may be combined to generate a single state signal indicating an overall reactive power flow in the EDN.

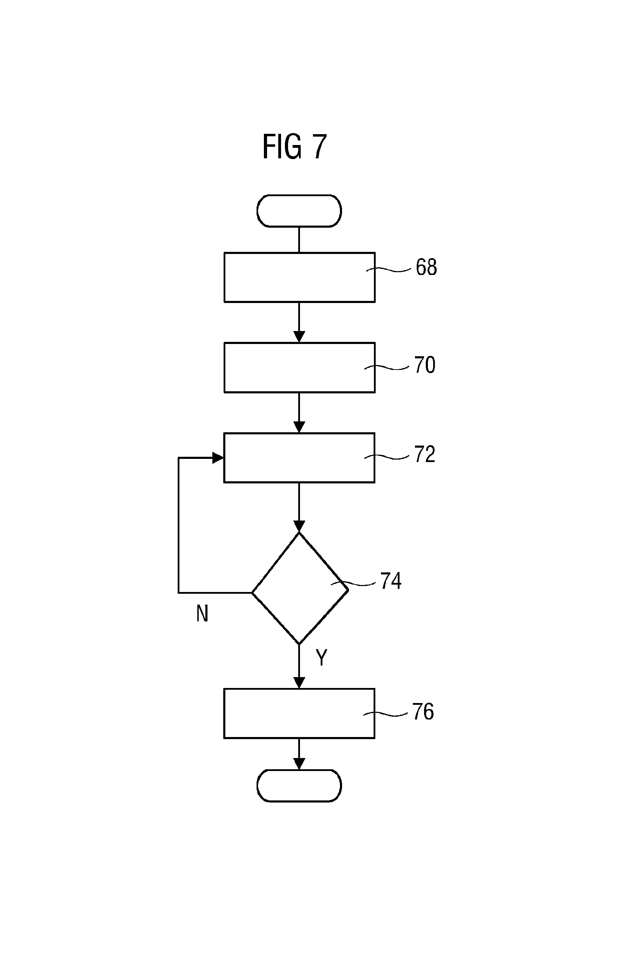

FIG 7 illustrates exemplary flowchart of the steps involved in updating the charging schedule based on the reactive power flow in the EDN, in accordance with an embodiment. At step 68, electric vehicles, such as electric vehicle 48, are connected to the nodes in the EDN. The electric vehicles are charged using the electricity provided by the EDN. The charging demand of the electric vehicle is entered by an owner of the consumer node, using a remotely located device. At step 70, the charging demand is communicated to the charging schedule generation module 8. At step 72, the charging schedule generation module 8 generates a charging schedule by adjusting the charging rate according to overall conditions of the EDN with maximizing the usage of green energy. At step 74, it is checked if the charging demand of the consumer node is met. In case the demand is not met, the charging schedule is updated based on the estimated overall condition of the EDN. At step 76, once the charging demand of the electric vehicle is met, the consumer node of that electric vehicle 48 is removed from the minimization function. Further, the minimization function is updated with the remaining electric vehicles which are connected to the EDN.

FIG 8 illustrates an exploded view of the VAR control server 6, in accordance with an embodiment. The VAR control server 6 includes a processor 82, a memory unit 84, a storage unit 86, an Input/Output (I/0) module 88 and a sensors unit 90. The aforementioned are communicatively coupled to each other via a communication bus 80. The processor 82 is configured to execute one or more machine readable instructions stored in the memory unit 84. The processor 82, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 82 may also include embedded controllers, such as generic or programmable logic devices or arrays, application specific integrated circuits, single-chip computers, and the like.

The memory unit 84 may be volatile memory and non-volatile memory. A variety of computer-readable storage media may be stored in and accessed from the memory unit 84. The memory unit 84 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. Further, the memory unit 84 includes the state signal generation unit 4 and the charging schedule generation unit 8 (not shown in FIG 8). In a preferred embodiment, the state signal generation unit 4 and the charging schedule generation unit 8 is stored in the memory unit 84 as processor executable instructions, which can be executed by a processor such as processor 82.

The storage unit 86 may be a non-transitory storage medium configured for storing files and databases. For example, the storage unit 14 pricing/charging contracts between the distributor, consumer and the producer. Further, the storage unit 86 may contain historical load profiles of the loads I the EDN. In an embodiment, the storage unit 86 may be the database 21. It can be noted that the aforementioned data may be located at a remote server and may be remotely accessed via a network connection.

The input/output module 88 may include keyboard, keypad, monitor, touch sensitive display screen, mouse and the like. The input/output module 88 enable the user to interface with the computing device for inputting data associated with the electrophysiological data of the subject. For example, the input device may enable the selection of an abnormality condition to be monitored.

The sensors unit 90 includes one or more sensors which measures environmental parameters such as humidity, temperature, wind velocity, day light intensity and the like. The environmental parameters are used to generate the charging schedule and control the reactive flow in the EDN.

The method and system described in the invention, facilitates integration of electric vehicles into the existing electricity distribution network, while keeping the reactive power flow in the EDN within permissible limits. Further, the method and system charges the EVs at the lowest possible cost while promoting the usage of renewable sources of energy.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

List of Reference Signs

| | |
|---|---|
| 1 | exemplary electric distribution network (EDN) coupled with a VAR control server |
| 2 | Exemplary electric distribution network (EDN) |
| 3-1-N | Generation nodes |
| 4-1-N | Consumer nodes |
| 5 | Network |
| 6 | Volt Ampere Reactive Control server |
| 7 | State signal generation modules |
| 8 | Charging schedule generation module |

| 21 | Database |
| 26 | Charging schedule generation module |
| 28 | Meter reading module |
| 30 | Load classification module |
| 32 | Estimation module |
| 20 | Charging requirement module |
| 34 | Display |
| 36 | Current charging level |
| 38 | Final charging level |
| 40 | Time limit |
| 44 | Plug point |
| 42 | Input unit |
| 46 | Charging cable Plug |
| 48 | Electric Vehicle (EV) |
| 52 | Step of determining a state of a reactive power flow |
| 54 | Step of determining a charging requirement |
| 56 | Step of generating a charging schedule |
| 58 | Step of computing load profiles of one or more nodes in the EDN |
| 60 | Step of estimating a short term reactive load across all the nodes in the EDN |
| 62 | Step of generating a state signal based on a current and estimated flow of reactive power in the nodes within the EDN |
| 68 | Step of connecting electric vehicles to the nodes in the EDN |
| 70 | Step of communicating the charging demand to the charging schedule generation module |
| 72 | Step of generating a charging schedule by charging schedule generation module |
| 74 | Step of checking if the charging demand of the consumer node is met |
| 76 | Step of removing a consumer node from a minimization function once the charging demands are met |
| 80 | Communication bus |
| 82 | Processor |
| 84 | Memory unit |
| 86 | Storage unit |
| 88 | Input/Output module |
| 90 | Sensors module |

## Claims

1. A system for controlling a flow of voltage and reactive power in an electricity distribution network (EDN), the system comprising:

   the electricity distribution network (END) comprising one or more nodes, wherein the nodes are at least one of a consumer node (4-1 - 4-N) and a generation node (3-1 - 3-N);
   a processor (82);
   a memory unit (84) coupled to the processor (82),

   wherein the memory unit (84) comprises:

   a state signal generation module (4), configured to generate a state signal representing a current state of in the electricity distribution network;
   a charging schedule generation module (8), configured to generate a charging schedule, based on the state signal, to charge the entity at certain time intervals so as to regulate the reactive power flow within the EDN.

2. The system according to claim 1, wherein the charging schedule generation module (8) is further configured to generate the charging schedule having a minimum cost based on a charging demand and pricing contracts.

3. The system according to any of the claims 1 and 2, wherein the charging schedule generation module (8) is configured to process the charging demands obtained from one or more charging requirement modules (20), wherein the charging requirement modules are remotely located and configured to communicate the charging demand to the charging schedule generation module (8).

4. The system according to any of the claims 1-3, wherein the charging schedule generation module (8) is configured to control the load tap settings and capacitor banks in order to regulate the flow of voltage and reactive power in the EDN.

5. The system according to claim 1, wherein the state signal generation module (4) is configured to generate the state signal by processing at least one of a load/generator profile, historical data of load behaviour and energy meter reading from the one or more nodes.

6. The system according to any of the claims 1 and 5, wherein the state signal generation module (4) comprises:

   a load classification module (30) configured to classify loads/generators based on load prediction reliability,
   an estimation module (32) configured to generate the state signal based on the information provided by the load classification module and real time measurements of active and reactive power in the EDN.

7. The system according to any of the preceding claims, wherein the one or more charging requirement modules (20) are deployed at one or more consumer nodes in the EDN.

8. The system according to any of the preceding claims, wherein an operating status of the charging requirement module (20) is controlled by the charging schedule generation module (8).

9. The system according to any of the preceding claims, wherein the EDN includes one or more power generation nodes (3-1 - 3-N) adapted to generate power using renewable energy.

10. The system according to any of the preceding claims, wherein a consumer node of the one or more consumer nodes (4-1 - 4-N) is an electric vehicle (48).

11. A method of controlling a flow of voltage and reactive power in an electricity distribution network (EDN), wherein the EDN includes one or more consumer nodes (4-1

   - 4-N) and one or more generation nodes (3-1 - 3-N), the method comprising:

   determining a state of a reactive power flow (52) in an electric distribution network (EDN);
   determining a charging requirement (54) for the consumer node in the EDN;
   generating a charging schedule (56) based on the state of the reactive power flow in the EDN and the charging requirement.

12. The method according to claim 11, wherein generating the charging schedule comprises computing a pricing level of the electricity supplied based on the charging requirement and selecting one or more energy suppliers based on one or more pricing contracts.

13. The method according to claim 11, wherein generating the charging schedule comprises updating the charging schedule periodically based on the charging demand and the state of the reactive power flow in the EDN.

14. The method according to claim 11 and 13, wherein updating the charging schedule comprises modifying the activation times of the consumer node to regulate the reactive power flow in the EDN within a permissible limit.

15. The method according to claim 11, wherein determining a state of a reactive power flow in an electric distribution network (EDN) comprises:

   computing load profiles (58) of one or more nodes in the EDN;
   estimating a short term reactive load (60) across all the nodes in the EDN;
   generating a state signal (62) based on a current and estimated flow of reactive power in the nodes within the EDN.

16. The method according to claim 11, wherein determining the charging requirement for the consumer node in the EDN comprises:

   receiving a charging demand communicated by the consumer node.

17. The method according to claim 11, wherein the charging demand includes a charging level and a time duration for meeting the charging level.

# FIG 1

3-1

3-2

3-N

4-1

4-2

4-N

2

5

4

8

6

1

FIG 2

15

```
┌─────┐      ┌─────┐      ┌─────┐
│  7  │─────▶│  8  │─────▶│ 22  │
└─────┘      └─────┘      └─────┘
                ▲
                │
             ┌─────┐
             │ 21  │
             └─────┘
```

FIG 3

```
┌──────────────────────────────────────┐
│                                   7    │
│              ┌─────┐                   │
│              │ 26  │                   │
│              └─────┘                   │
│                 │                      │
│                 ▼                      │
│  ┌─────┐     ┌─────┐     ┌─────┐       │
│  │ 28  │────▶│ 30  │────▶│ 32  │       │
│  └─────┘     └─────┘     └─────┘       │
│                                        │
└──────────────────────────────────────┘
```

FIG 4

EP 3 024 105 A1

FIG 5

FIG 6

16

# FIG 7

FIG 8

Europäisches
Patentamt

European
Patent Office

Office européen
des brevets

# EUROPEAN SEARCH REPORT

Application Number

EP 14 19 4487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/052450 A2 (V2GREEN INC [US]; BRIDGES SETH W [US]; POLLACK SETH B [US]; KAPLAN DAV) 23 April 2009 (2009-04-23) | 1-16 | INV.<br>H02J3/00<br>H02J3/16 |
| Y | * paragraphs [0101], [0110] - [0112], [0129], [0043], [0069], [0100], [0062], [0067], [0094], [0096], [0081], [0044], [0059], [0080]; figures 22,1,2,7,18, *<br>* paragraphs [0092], [0064] - [0065], [0075], [0084] - [0087], [0108], [0130] * | 17 | H02J3/18 |
| | ----- | | |
| Y | US 2011/015799 A1 (POLLACK SETH B [US] ET AL) 20 January 2011 (2011-01-20)<br>* paragraphs [0140] - [0152] * | 17 | |
| | ----- | | |
| A | WO 2012/106389 A2 (S & C ELECTRIC CO [US]; BERKOWITZ DONALD S [US]; PORTER DAVID [US]; BE) 9 August 2012 (2012-08-09)<br>* figures 1a,2,4, * | 1-17 | |
| | ----- | | TECHNICAL FIELDS SEARCHED (IPC) |
| A | EP 2 385 606 A1 (SIEMENS AG [DE]) 9 November 2011 (2011-11-09)<br>* paragraphs [0028], [0029], [0035] * | 1-17 | H02J |
| | ----- | | |
| A | US 2010/017249 A1 (FINCHAM CARSON C K [US] ET AL) 21 January 2010 (2010-01-21)<br>* figures 1,3,4,7,8 * | 1-17 | |
| | ----- | | |

The present search report has been drawn up for all claims

| Place of search | Date of completion of the search | Examiner |
|---|---|---|
| Munich | 5 May 2015 | Hanisch, Thomas |

## ANNEX TO THE EUROPEAN SEARCH REPORT
## ON EUROPEAN PATENT APPLICATION NO.

EP 14 19 4487

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2015

| Patent document cited in search report | | Publication date | Patent family member(s) | | Publication date |
|---|---|---|---|---|---|
| WO 2009052450 | A2 | 23-04-2009 | US 2009066287 A1<br>WO 2009052450 A2 | | 12-03-2009<br>23-04-2009 |
| US 2011015799 | A1 | 20-01-2011 | US 2011015799 A1<br>US 2011016063 A1 | | 20-01-2011<br>20-01-2011 |
| WO 2012106389 | A2 | 09-08-2012 | AU 2012212276 A1<br>CA 2862904 A1<br>WO 2012106389 A2 | | 15-01-2015<br>09-08-2012<br>09-08-2012 |
| EP 2385606 | A1 | 09-11-2011 | AU 2011202020 A1<br>BR PI1102410 A2<br>CA 2738567 A1<br>CN 102237689 A<br>EP 2385606 A1<br>JP 2011239670 A<br>KR 20110122065 A<br>US 2011266871 A1 | | 17-11-2011<br>25-09-2012<br>03-11-2011<br>09-11-2011<br>09-11-2011<br>24-11-2011<br>09-11-2011<br>03-11-2011 |
| US 2010017249 | A1 | 21-01-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13879452 B